# EUROPEAN PATENT APPLICATION

(11) **EP 3 493 087 A1**
(43) Date of publication of application: **05.06.2019**
(21) Application number: 18196267.1
(22) Date of filing: 24.09.2018
(51) Int. Cl.: G06F 21/32, B60R 25/25

(54) **COMMUNICATION SYSTEM**

(30) Priority: 30.11.2017 JP 2017229778
(71) Applicant: Renesas Electronics Corporation, 135-0061 Tokyo (JP)
(72) Inventor: TOMISAWA, Satoru, Koutou-ku, Tokyo 135-0061 (JP); HAYASHI, Yoshihiro, Koutou-ku, Tokyo 135-0061 (JP); MARUYAMA, Yuichi, Koutou-ku,Tokyo 135-0061 (JP); WAKADA, Hideyuki, Koutou-ku, Tokyo 135-0061 (JP)
(74) Representative: Betten & Resch

(57) **Abstract**

A secure communication system is provided, in which a common cryptographic key is generated using the biological information simultaneously acquirable by multiple communication devices. The communication system includes multiple separated communication devices. The communication device generates the same common key based on the feature element of simultaneously acquirable biological information, and performs encryption and decryption using the common key. The communication device includes a biological information acquiring unit to acquire the feature element of the biological information; a common key generation unit to generate the common key; an encryption/decryption unit to encrypt transmit information and to decrypt receive information with the common key; and a communication unit to receive the transmit information and to transmit the receive information.

## Description

### CROSS-REFERENCE TO RELATED APPLICATIONS

The disclosure of Japanese Patent Application No.2017-229778 filed on November 30, 2017 including the specification, drawings and abstract is incorporated herein by reference in its entirety.

### BACKGROUND

The present disclosure relates to a communication system and is applicable to a communication system that includes two or more communication terminal devices.

Japanese Unexamined Patent Application Publication No. 2016-211157 (Patent Literature 1) discloses the technology on an information processing device that performs wireless communications with multiple mobile information terminals. The information processing device includes an input/output unit that performs data input/output, and a controller that makes the input/output unit output a control signal to unlock a door of a vehicle when authentication based on a vehicle ID of the vehicle and a key ID of a key of the vehicle is successful and when, after a one-time password has been transmitted to a mobile information terminal existing in the nearest place to the vehicle among the multiple mobile information terminals, it is detected that the one-time password has been uttered.

### SUMMARY

However, Japanese Unexamined Patent Application Publication No. 2016-211157 (Patent Literature 1) does not refer to encryption of a release key (ID information) that a smart key sends. Therefore, when the contents of the release key are secretly read by a third party at the time of sending the release key, it is likely that one of the two-step authentications is detected easily.

The issue of the present disclosure is to provide a secure communication system that can generate a common cryptographic key using biological information simultaneously acquirable by multiple communication devices.

The other issues and new features of the present disclosure will become clear from the description of the present specification and the accompanying drawings.

The following explains briefly the outline of a typical embodiment of the present disclosure.

That is, a communication system includes two or more separated communication devices. The communication devices generate the same common key based on a feature element of simultaneously acquirable biological information, and perform encryption and decryption using the common key. Each of the communication devices includes: a biological information acquiring unit to acquire the feature element of the biological information; a common key generation unit to generate the common key; an encryption/decryption unit to encrypt transmit information and to decrypt receive information with the common key; and a communication unit to receive the transmit information and to transmit the receive information.

According to the communication system, it is possible to perform secure communication in which a common cryptographic key is generated using the biological information that is simultaneously acquirable by multiple communication devices.

### BRIEF DESCRIPTION OF THE DRAWINGS

The present invention will become fully understood from the detailed description given hereinafter and the accompanying drawings, wherein:
FIG. 1 is a drawing illustrating a communication system according to an embodiment;
FIG. 2 is a drawing illustrating a communication system according to Implementation Example 1;
FIG. 3 is a flow chart illustrating the processing according to Implementation Example 1;
FIG. 4 is a drawing illustrating a time waveform when "ah" is pronounced;
FIG. 5 is a drawing illustrating a sound spectrogram of the waveform illustrated in FIG. 4, expressed in frequency components on the vertical axis against time on the horizontal axis;
FIG. 6 is a drawing illustrating a power spectrum converted from the time waveform illustrated in FIG. 5;
FIG. 7 is a drawing illustrating a result of cepstrum analysis performed on the time waveform illustrated in FIG. 5;
FIG. 8 is a drawing illustrating the relation between a fundamental frequency and a quefrency value at which a peak appears, when the distance between a voice source and a sound-collecting microphone changes;
FIG. 9 is a drawing illustrating the relation between a fundamental frequency and a quefrency value at a peak, when "ah" is pronounced with consciousness of a high-pitched sound and when "ah" is pronounced with consciousness of a low-pitched sound;
FIG. 10 is a drawing illustrating a communication system according to Implementation Example 2;
FIG. 11 is a flow chart illustrating the processing according to Implementation Example 2;
FIG. 12 is a drawing illustrating a communication system performing two-step authentication, according to Implementation Example 3; and
FIG. 13 is a drawing illustrating a communication system according to Implementation Example 4.

### DETAILED DESCRIPTION

Hereinafter, an embodiment and an implementation example are described with reference to the attached drawings. In the following explanation, the same symbol or reference numeral is attached to the same element and the repeated explanation thereof may be omitted. The drawings may be schematically expressed, compared with the actual mode, in order to make the explanation thereof more clearly, however, they are only an example and do not restrict the interpretation of the present invention.

### <Embodiment>

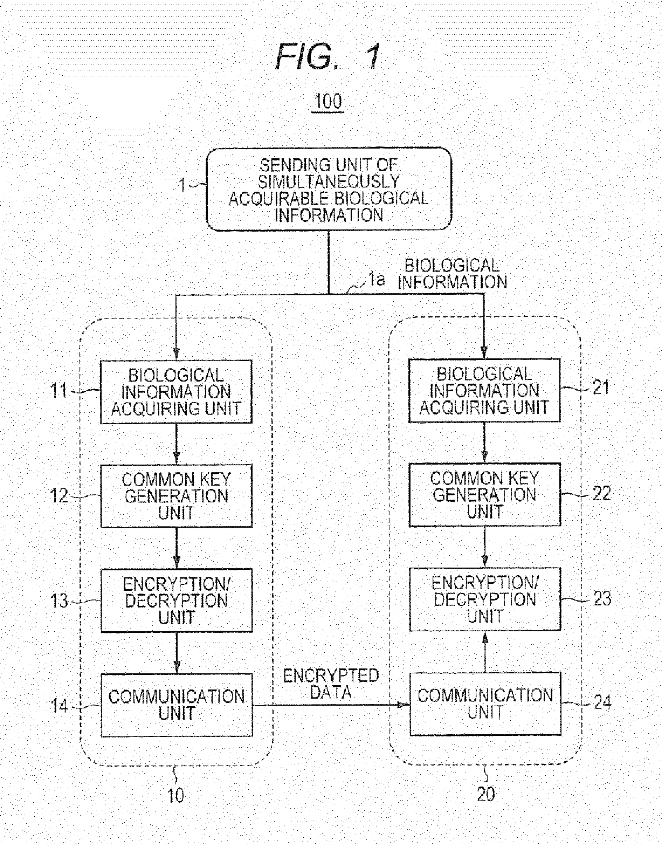

FIG. 1 illustrates a communication system according to an embodiment.

A communication system 100 includes a communication device (an ID information transmitting terminal device) 10 and a communication device (an ID information receiving terminal device) 20 as two or more separated communication devices. The communication device 10 and the communication device 20 acquire a feature element of biological information 1a from a sending unit 1 of the simultaneously acquirable biological information, generate the same common key based on the feature element of the acquired biological information 1a, and perform encryption and decryption using the generated common key.

The communication device 10 includes a biological information acquiring unit (feature acquisition unit) 11 that acquires the feature element of the biological information 1a from the sending unit 1 of the simultaneously acquirable biological information, and a common key generation unit 12 that generates a common key based on the feature element of the acquired biological information 1a. The communication device 10 further includes an encryption/decryption unit 13 that encrypts transmit information, such as ID information, using the common key generated by the common key generation unit 12, and a communication unit 14 that transmits the encrypted transmit information (data) as a wireless signal.

The communication device 20 includes a biological information acquiring unit (feature acquisition unit) 21 that acquires the feature element of the biological information 1a from the sending unit 1 of the simultaneously acquirable biological information, and a common key generation unit 22 that generates a common key based on the feature element of the acquired biological information 1a. The communication device 20 further includes an encryption/decryption unit 23 that decrypts receive information using the common key generated by the common key generation unit 22, and a communication unit 24 that receives, as a wireless signal, the encrypted transmit information transmitted from the communication unit 14 of the communication device 10 and that supplies the encrypted transmit information to the encryption/decryption unit 23.

Here, as the feature element of the biological information 1a, it is possible to employ a vocal cord vibration frequency or a voiceprint of the voice of a proper user, for example.

According to the embodiment, the communication devices 10 and 20 that perform communication can acquire simultaneously for example, the feature element (for example, a vocal cord vibration frequency, a voiceprint, etc. of a voice) of the simultaneously acquirable biological information 1a, and each of the communication devices 10 and 20 can generates the common key (cryptographic key) based on the feature quantity.

When communicating between the communication devices 10 and 20, secure communication that is encrypted with the use of the generated common key is performed. In the process where each of the communication devices 10 and 20 comes into possession of the common key (cryptographic key), any secure communication network for sharing the common key is not required. Therefore, it is possible to expect the reduction of installation cost and management cost for the secure communication network.

It is also possible for the user to change the feature of the biological information intentionally and to change the common key easily. Therefore, the estimation of the common key by a malicious third party becomes difficult; accordingly, it is possible to expect enhanced tamper resistance.

### <Implementation Example 1>

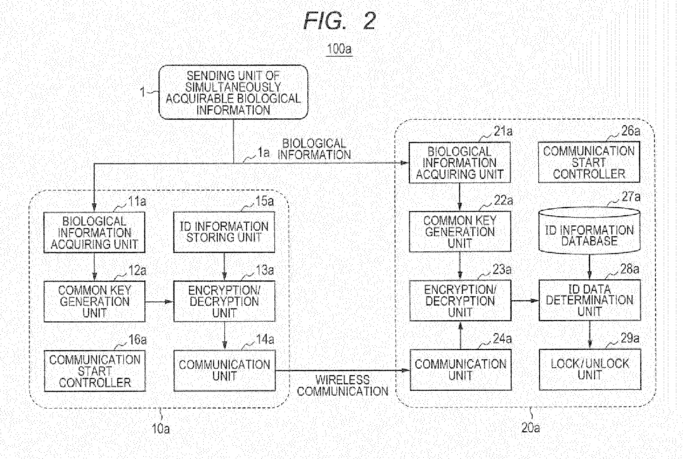

FIG. 2 illustrates a communication system according to Implementation Example 1.

The communication system 100a according to Implementation Example 1 is an example of a communication system in which the communication device (ID information transmitting terminal device) 10a is a wireless key device and the communication device (ID information receiving terminal device) 20a is a lock/unlock device. In the communication system 100a, when a wireless signal (for example, a beacon signal) is transmitted from the wireless key device 10a to the lock/unlock device 20a and when the wireless signal received by the lock/unlock device 20a coincides with an intended signal (ID), the lock/unlock device 20a locks or unlocks the key.

The followings can be exemplified as a concrete application of Implementation Example 1.
(1) Locking and unlocking of a room door, a locker, a warehouse, a storehouse, a padlock, a key of a business case, etc.,
(2) lock cancellation of a personal computer, a tablet, a smart phone, an electronic device, etc.,
(3) on-off controls of an IoT (Internet of Things) device, etc.,
(4) authentication in an automatic teller machine and authentication in lock cancellation of a vehicle, and
(5) one of the multiplexed user authentication.

The configuration of each block of FIG. 2 is explained.

The wireless key device 10a includes a communication start controller 16a that controls the start of communication, a biological information acquiring unit (feature acquisition unit) 11a that acquires the biological information 1a from the sending unit 1 of the simultaneously acquirable biological information, and a common key generation unit 12a that generates a common key (cryptographic key) based on the acquired biological information 1a. The wireless key device 10a further includes an ID information storing unit 15a that stores the ID information registered in a lock/unlock device in order to perform locking/unlocking, an encryption/decryption unit 13a that encrypts the ID information with the generated common key, and a communication unit 14a that transmits the encrypted ID information.

In the wireless key device 10a, the biological information acquiring unit 11a can be configured with a microphone. The communication start controller 16a, the common key generation unit 12a, and the encryption/decryption unit 13a can be configured with a central processing unit (CPU) formed in a semiconductor device. The ID information storing unit 15a can be configured with a memory device formed in the semiconductor device. The communication unit 14a can be configured with a beacon communication unit of the BLE (Bluetooth (registered trademark) Low Energy) standard formed in the semiconductor device.

The lock/unlock device 20a includes a communication start controller 26a that controls the start of communication, a biological information acquiring unit (feature acquisition unit) 21a that acquires the biological information 1a, and a common key generation unit 22a that generates a common key (cryptographic key) based on the acquired biological information 1a. The lock/unlock device 20a further includes a communication unit 24a that receives the wireless information transmitted from the wireless key device 10a, an encryption/decryption unit 23a that decrypts the encrypted ID information received using the generated common key, and an ID information database 27a that stores the ID information registered in advance to be used in the case of performing locking/unlocking. The lock/unlock device 20a yet further includes an ID data determination unit 28a that compares the decoded ID information and the ID information registered in the database 27a, and a lock/unlock unit 29a that performs locking/unlocking of a key when it is determined that the intended ID signal has been received.

In the lock/unlock device 20a, the biological information acquiring unit 21a can be configured with a microphone. The communication start controller 26a, the common key generation unit 22a, the encryption/decryption unit 23a, and the ID data determination unit 28a can be configured with a central processing unit (CPU) formed in a semiconductor device. The ID information database 27a can be configured with a memory device formed in the semiconductor device. The communication unit 24a can be configured with a beacon communication unit of the BLE (Bluetooth Low Energy) standard formed in the semiconductor device. The lock/unlock unit 29a can be configured with a lock/unlock control circuit formed in the semiconductor device and a machine part controlled by the lock/unlock control circuit, such as a key provided in the door.

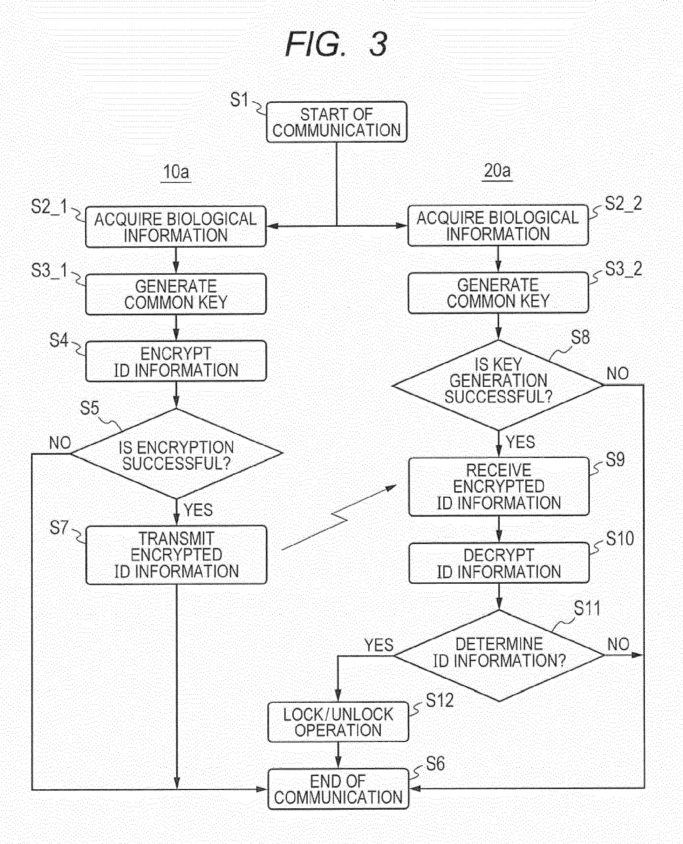

FIG. 3 illustrates the flow chart according to Implementation Example 1. This flow chart is explained in the following.

The wireless key device 10a and the lock/unlock device 20a start themselves using the communication start controllers 16a and 26a respectively to bring themselves into the state ready to collect the biological information 1a (Step S1). In one of preferable methods, the communication start controllers 16a and 26a can control the start of communication by detecting the fact that buttons implemented in the wireless key device 10a and the lock/unlock device 20a have been depressed, for example.

Next, both of the wireless key device 10a and the lock/unlock device 20a acquire the biological information 1a sent by the sending unit 1 of the simultaneously acquirable biological information (Steps S2_1 and S2_2). The details of the biological information 1a will be described later.

Next, both of the wireless key device 10a and the lock/unlock device 20a respectively extract the feature quantity from the biological information 1a and generate the common key reflecting the feature quantity (Steps S3_1 and S3_2). The details of the common key and the encryption will be described later.

Next, the wireless key device 10a encrypts the ID information using the generated common key (Step S4). When the acquisition of the biological information 1a and the extraction of the feature quantity have failed and the encryption has not been performed (NO at Step S5), the flow shifts to the end of communication (Step S6).

Next, when the encryption has been successfully performed in the wireless key device 10a (YES at Step S5), the encrypted ID information is transmitted to the lock/unlock device 20a (Step S7) . An example of the communication method here is the broadcast communication using the BLE Beacon. After the data transmit, the wireless key device 10a moves to the state of the end of communication (Step S6).

Next, in the lock/unlock device 20a, when the generation of the common key has failed (NO at Step S8), the flow shifts to the end of communication (Step S6). When the generation of the common key has been successful (YES at Step S8), the encrypted ID information is received (Step S9), and the data received is decrypted by utilizing the generated common key as the decryption key (Step S10). The wireless key device 10a and the lock/unlock device 20a extract the feature quantity from the same biological information 1a to generate the common key. Therefore, the ID information encrypted by the wireless key device 10a can be decrypted by the lock/unlock device 20a.

Next, in the lock/unlock device 20a, the ID data determination unit 28a compares and determines the decoded ID information and the ID information stored in the database 27a (Step S11). When both pieces of the ID information coincide (YES at Step S11), the locking/unlocking of the key is operated (Step S12), and the flow shifts to the end of communication (Step S6). When both pieces of the ID information do not coincide (NO at Step S11), the flow shifts to the end of communication without performing any operation (Step S6) .

### (Simultaneously acquirable biological information)

There are the following two items as the directions to be required for the feature quantity of the simultaneously acquirable biological information 1a.
(1) The feature quantity of the biological information 1a does not change depending on an observation condition.
(2) The feature quantity of the biological information 1a has variation width.

If the item (1) is not satisfied, a common key generated by the transmitting side communication device (the wireless key device 10a) and a common key generated by the receiving side communication device (lock/unlock device) may be different, depending on the acquiring condition (the measurement place and the measurement device) of the biological information 1a. Therefore, there arises difficulty in decrypting the encrypted data.

If the item (2) is not satisfied, a possibility of communicating by use of the same common key becomes high; therefore, there is concern that estimation of the common key by a third party becomes easy.

In the present specification, in order to give concreteness, a vocal cord vibration of a voice is used as an example of the feature quantity of the biological information 1a. There is individual difference in the features, such as tone, pitch, and loudness of a voice. As the individual difference, there are the feature acquired a priori and the feature acquired a posteriori. The feature acquired a priori results from the oscillation period of a vocal cord and the difference in the form from a vocal cord to a lip called a vocal tract. On the other hand, the feature acquired a posteriori results from a dialect, a habit of how to talk, and voice training, for example.

A sound spectrogram of a voice is ordinarily used for the analysis of this feature.

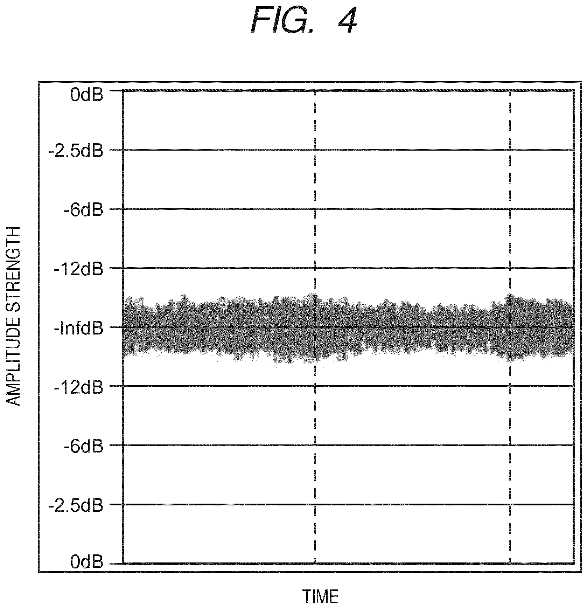

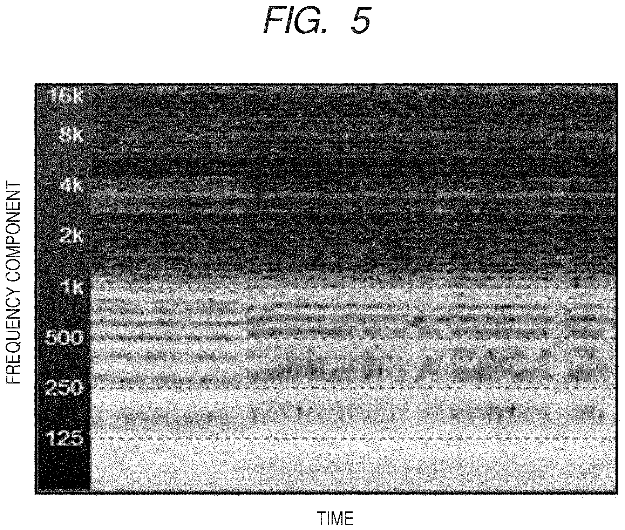

FIG. 4 illustrates a time waveform when "ah" is pronounced. In FIG. 4, the horizontal axis expresses time and the vertical axis expresses amplitude strength. FIG. 5 illustrates a sound spectrogram of the waveform illustrated in FIG. 4, expressed in frequency components on the vertical axis against time on the horizontal axis. The difference in color (shading) illustrated in FIG. 5 indicates the difference between the place where the frequency components of a voice signal are concentrated and the place where they are not concentrated.

It is possible to extract the feature of the voice pattern for an individual by analyzing the sound spectrogram illustrated in FIG. 5. Here, the cepstrum analysis as a general analyzing method is carried out. In the cepstrum analysis, Fourier transform is performed for the voice waveform to obtain the power spectrum, then inverse Fourier transform is performed for the logarithmic value of the power spectrum.

As the result of the cepstrum analysis, the portion originating in the form of the vocal tract appears in the low frequency region, and the feature originating in the vocal cord vibration appears in the high frequency region. The feature appearing in the low frequency region is utilized for speech recognition. However, the feature is complicated and depends on the observation condition; accordingly, the feature is not suitable as the feature quantity of the biomedical signal of the present invention. The feature quantity appearing in the high frequency region corresponds to a vocal cord vibration cycle. As will be described later, the feature quantity concerned has little dependence on the observation condition and can be changed by a user comparatively easily. Therefore, the feature quantity concerned is suitable as the feature quantity of the biological information of the present invention.

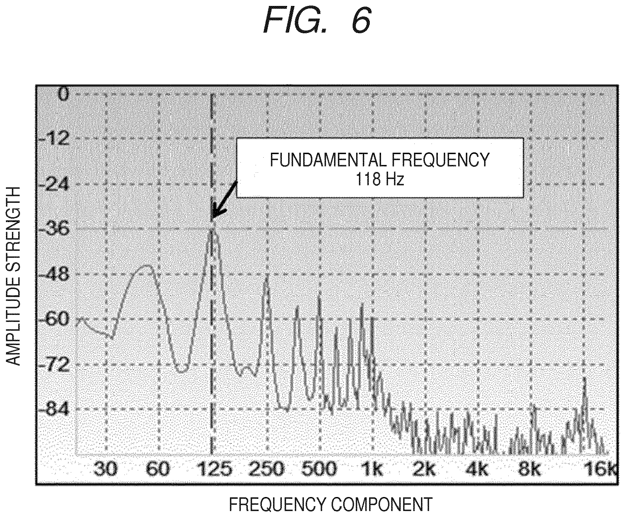

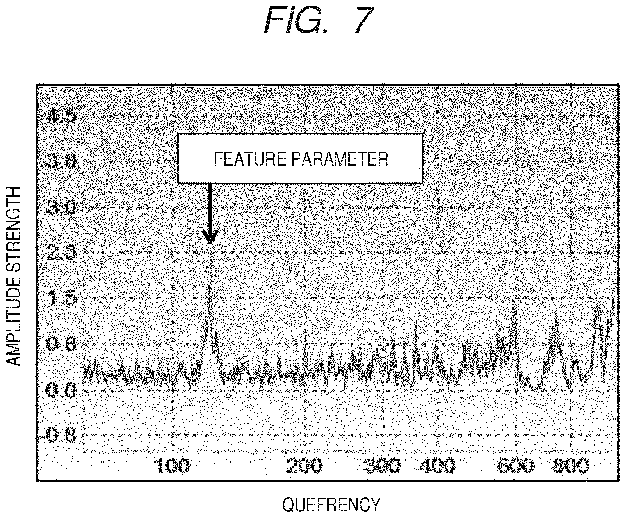

The power spectrum converted from the time waveform illustrated in FIG. 5 is illustrated in FIG. 6, and the result of the cepstrum analysis is illustrated in FIG. 7. The horizontal axis of FIG. 7 has the same dimension as time. However, inverse Fourier transform is performed for the logarithmic value; accordingly, the numerical value of the horizontal axis does not correspond to time but may be called quefrency. Here, it is called quefrency.

The greatest peak value illustrated in FIG. 6 is the frequency corresponding to the vocal cord vibration frequency called the fundamental frequency. Voice becomes a high-pitched sound as the frequency is higher, and it becomes low-pitched sound as the frequency is conversely lower. Generally, the mean value for a male is about 125Hz, and the mean value for a female is about 250 Hz, two times the mean value for a male. The fundamental frequency as a male voice shown in FIG. 6 is 118 Hz for example.

The peak of the quefrency value shown in FIG. 7 is the feature quantity corresponding to the vocal cord vibration frequency, and has a peak at around 110 in the case of FIG. 7. By carrying out the cepstrum analysis, the fundamental frequency shown in FIG. 6 is converted into the feature quantity that is easier to find as seen in FIG. 7. This is an advantage of the cepstrum analysis. In the present specification, the quefrency value at which a peak appears (the vocal cord vibration frequency) is considered as an example of the feature quantity of the biological information 1a.

When actual use is considered, it is generally assumed that the distance from a source 1 (for example, a voice source 1) of the biological information 10a to the wireless key device 10a and the distance from the source 1 to the lock/unlock device 20a are different. When the feature quantities of the biological information 1a acquired by both the wireless key device 10a and the lock/unlock device 20a are different due to the difference of the distance, the common keys to be generated are also different. Therefore, there is a possibility that decryption of the encrypted data may fail.

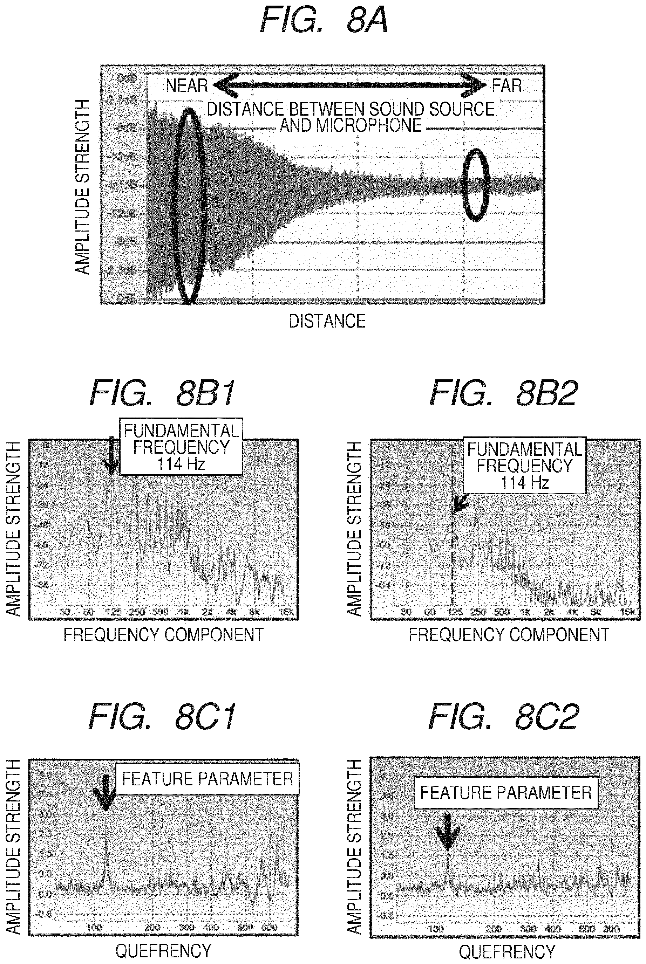

FIG. 8 illustrates the relation between a fundamental frequency and a quefrency value at which a peak appears, when the distance between a voice source and a sound-collecting microphone changes. An inset (a) of FIG. 8 illustrates the relation between amplitude strength when "ah" is pronounced and the distance between the voice source and the microphone. The amplitude strength is large when the distance between the voice source and the microphone is small, and the amplitude strength is small when the distance between the voice source and the microphone is large. An inset (b1) of FIG. 8 illustrates the power spectrum converted from the time waveform when the distance between the voice source and the microphone is small. An inset (c1) of FIG. 8 illustrates the result of the cepstrum analysis when the distance between the voice source and the microphone is small. An inset (b2) of FIG. 8 illustrates the power spectrum converted from the time waveform when the distance between the voice source and the microphone is large. An inset (c2) of FIG. 8 illustrates the result of the cepstrum analysis when the distance between the voice source and the microphone is large.

In the vocal cord vibration frequency of a voice, the amplitude strength changes when the distance between the voice source and the sound-collecting microphone changes as illustrated in the inset (a) of FIG. 8. However, as illustrated in the insets (c1) and (c2) of FIG. 8, the vocal cord vibration frequency (the quefrency value at the peak) does not change. Therefore, when the common key is generated based on the vocal cord vibration frequency (the quefrency value at the peak), it is possible to generate the same common key, independently of the distance between the sound source and the microphone.

In order to prevent for a malicious third party from estimating the cryptographic key (tamper resistance), it is desirable that the common key to be generated can be changed frequently. In order to generate a different common key, it is necessary to change the feature quantity of the biological information 1a.

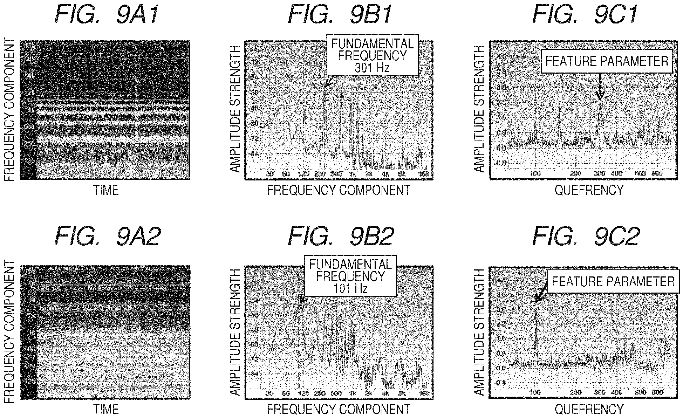

FIG. 9 illustrates the relation between a fundamental frequency and a quefrency value at a peak, when "ah" is pronounced with consciousness of a high-pitched sound and when "ah" is pronounced with consciousness of a low-pitched sound. The insets (a1), (b1), and (c1) of FIG. 9 illustrate the case where "ah" is pronounced with consciousness of a high-pitched sound, and the insets (a2), (b2), and (c2) of FIG. 9 illustrate the case where "ah" is pronounced with consciousness of a low-pitched sound. The insets (a1) and (a2) of FIG. 9 illustrate the sound spectrogram expressed in frequency components on the vertical axis against time on the horizontal axis. The insets (b1) and (b2) of FIG. 9 illustrate the power spectrum converted from the time waveforms. The insets (c1) and (c2) of FIG. 9 illustrate the result of cepstrum analysis.

As illustrated in FIG. 6, FIG. 7, and FIG. 8, the vocal cord vibration frequencies at the time of pronouncing "ah" without consciousness are 114 Hz - 118 Hz. As opposed to this, as illustrated in the insets (b1) and (c1) of FIG. 9, when "ah" is pronounced with consciousness of a high-pitched sound, the vocal cord vibration frequency goes up to 301 Hz, and the quefrency value at the peak also becomes about 301. On the other hand, as illustrated in the insets (b2) and (c2) of FIG. 9, when "ah" is pronounced with consciousness of a low-pitched sound, the vocal cord vibration frequency falls to 101 Hz, and the quefrency value at the peak also becomes about 101. In this way, it is possible for a user to change consciously the vocal cord vibration frequency (feature quantity). Therefore, by giving diversity to the common key generated consciously, it is possible to improve the tamper resistance.

### (On encryption based on a feature quantity)

As a simple method of encrypting ID information using the feature quantity of the biological information 1a, the code of the ID information is shifted by N times as much as the feature quantity.

The case of utilizing the iBeacon (registered trademark) is considered as an example. In the iBeacon, the space to store arbitrary data is a space of 16 bits called Major and a space of 16 bits called Minor. When it is assumed that the Major 16 bits are used in order to distinguish the service and the Application itself, the ID information is to be managed with the Minor 16 bits (65536 possible values) .

When it is assumed that the ID information is 1000, the quefrency value at the peak (feature quantity) is 150, and that the encryption algorithm is shifted by 10 times as much as the feature quantity, the ID information encrypted becomes 2500, as given by 1000+150×10=2500. Here, if the code after the encryption exceeds 65536, the code shall return to 0.

By adopting such algorithm, it is possible to improve the difficulty in estimating the ID information by analogy.

If the length (bit number) of the common key is increased sufficiently, the safety will enhance. However, there is a disadvantage that the processing becomes heavy and the encryption and the decryption become slow. Therefore, it is desirable to choose the length of the common key according to the security level that the application requires.

It is assumed that when encrypting the ID information (16 bits), the common key (16 bits) of the same length as the plaintext is employed. The change width of the fundamental frequency in FIG. 9 is 200 Hz (= 301 Hz - 101 Hz). When the feature quantity is distinguished every 12.5 Hz in consideration of the measurement error, the following is obtained: 200 Hz/12.5 Hz = 16 = 4 bits.

That is, when a voiced sound (sound accompanied by the vocal cord vibration) is pronounced once, the length of the common key becomes 4 bits. Therefore, in order to make the common key of 16 bits (= 4 bits × 4), it suffices that the voiced sound is pronounced four times, changing the pitch of voice. It is possible to determine how many times the voiced sound should be pronounced, from the security level required by the user.

According to Implementation Example 1, the communication devices 10a and 20a that perform communication can acquire simultaneously for example, the feature element (for example, a vocal cord vibration frequency, a voiceprint, etc. of a voice) of the simultaneously acquirable biological information 1a, and each of the communication devices 10a and 20a can generates the common key (cryptographic key) based on the feature quantity.

The common key is generated based on the feature quantity (for example, the vocal cord vibration frequency) of the biological information. Therefore, a secure network usually necessary for sharing the common key becomes unnecessary, and it is possible to expect the reduction of installation cost and management cost for the secure communication network.

A different common key can be generated by changing intentionally the feature of the biological information 1a (for example, by uttering a high-pitched voice and a low-pitched voice intentionally, when the vocal cord vibration frequency is adopted as the feature). Therefore, the estimation of the common key by a malicious third party becomes difficult; accordingly, it is possible to expect enhancement of the tamper resistance.

### <Implementation Example 2>

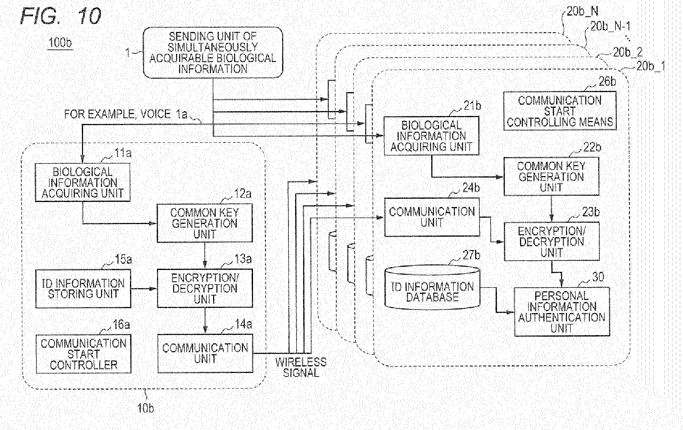

FIG. 10 illustrates a communication system according to Implementation Example 2.

As illustrated in FIG. 2, the communication system 100a according to Implementation Example 1 exemplifies the communication system in which the wireless key device 10a and the lock/unlock device 20a are in the one-to-one correspondence. A communication system 100b according to Implementation Example 2 includes an ID information transmitting terminal device 10b and multiple ID information receiving terminal devices 20b_1, 20b_2, ..., 20b_N-1, and 20b_N.

The configuration of the ID information transmitting terminal device 10b is the same as that of the wireless key device 10a, and includes the communication start controller 16a, the biological information acquiring unit (feature acquisition unit) 11a, the common key generation unit 12a, the ID information storing unit 15a, the encryption/decryption unit 13a, and the communication unit 14a.

Each of the ID information receiving terminal devices 20b_1 - 20b_N includes a communication start controller 26b to control the start of communication, a biological information acquiring unit (feature acquisition unit) 21b to acquire the biological information 1a, a common key generation unit 22b to generate a common key (cryptographic key) based on the acquired biological information 1a, and a communication unit 24b to receive a wireless signal transmitted from the ID information transmitting terminal device 10b. The wireless signal transmitted from the ID information transmitting terminal device 10b can employ a beacon of the BLE (Bluetooth Low Energy) standard.

Each of the ID information receiving terminal devices 20b_1 - 20b_N further includes an encryption/decryption unit 23b to decrypt the received encrypted ID information using the generated common key, and an ID information database 27b to store the ID information registered in advance. Each of the ID information receiving terminal devices 20b_1 - 20b_N further includes a personal information authentication unit 30 that compares the decoded ID information and the ID information registered in the database 27b, and that authenticates the transmitting person of the ID information transmitting terminal device 10b as the owner of the personal information associated with the ID information, when the intended ID signal is determined to have been received.

The personal information authentication unit 30 may be replaced with the ID data determination unit 28a and the lock/unlock unit 29a illustrated in FIG. 2.

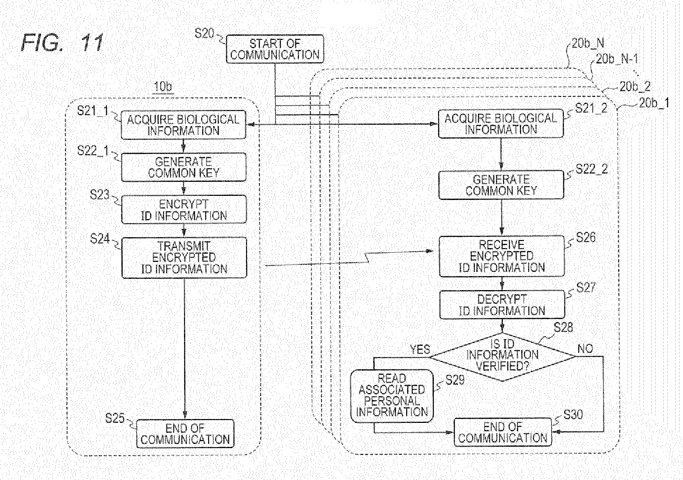

FIG. 11 is a flow chart illustrating the processing according to Implementation Example 2.

The communication start controllers 16a and 26b can start the communication by pushing the button implemented in the devices 10a and 20a illustrated in Implementation Example 1, for example. However, it requires time and effort to push the button implemented in each of the ID information receiving terminal devices 20b_1 - 20b_N. Therefore, in one of effective methods, the communication unit 24b of the ID information receiving terminal devices 20b_1 - 20b_N is activated always, and when the communication unit 24b of the ID information receiving terminal devices 20b_1 - 20b_N receives a pre-registered wireless signal (plaintext) indicative of the start of communication, from the ID information transmitting terminal device 10b, the communication is started (Step S20) to shift to the mode of acquiring the biological information 1a.

The subsequent flow from the acquisition of the biological information to the verification of the ID information is the same as explained in Implementation Example 1.

That is, both of the ID information transmitting terminal device 10b and the ID information receiving terminal devices 20b_1 - 20b_N acquire the biological information 1a sent by the sending unit 1 of the simultaneously acquirable biological information (Steps S21_1 and S21_2).

Next, both of the ID information transmitting terminal device 10b and the ID information receiving terminal devices 20b_1 - 20b_N extract the feature quantity from the biological information 1a and generate the common key reflecting the feature quantity (Steps S22_1 and S22_2).

Next, the ID information transmitting terminal device 10b encrypts the ID information using the generated common key (Step S23) .

Next, the ID information transmitting terminal device 10b transmits the encrypted ID information to the ID information receiving terminal devices 20b_1 - 20b_N (Step S24). An example of the communication method in the present case is the broadcast communication using the BLE Beacon. After the data transmit, the ID information transmitting terminal device 10b moves to the end of communication (Step S25).

Next, the ID information receiving terminal devices 20b_1 - 20b_N receive the encrypted ID information from the ID information transmitting terminal device 10b (Step S26), and decrypt the received data (ID information) by utilizing the generated common key as the decryption key (Step S27).

In the ID information verification (Step S28), the ID information database 27b that stores the personal information associated with the ID information is utilized. The ID information received in the personal information authentication unit 30 and the ID information in the ID information database 27b provided in the ID information receiving terminal devices 20b_1 - 20b_N are compared. When both pieces of the ID information coincide (YES at Step S28), a sending person of the ID information transmitting terminal device 10b is retrieved as the personal information associated with the ID information (Step S29), and the flow shifts to the end of communication (Step S30). When both pieces of the ID information do not coincide (NO at Step S28), the flow shifts to the end of communication without performing any operation (Step S30).

Therefore, also in Implementation Example 2, it is possible to obtain the same effect as in Implementation Example 1.

### <Implementation Example 3>

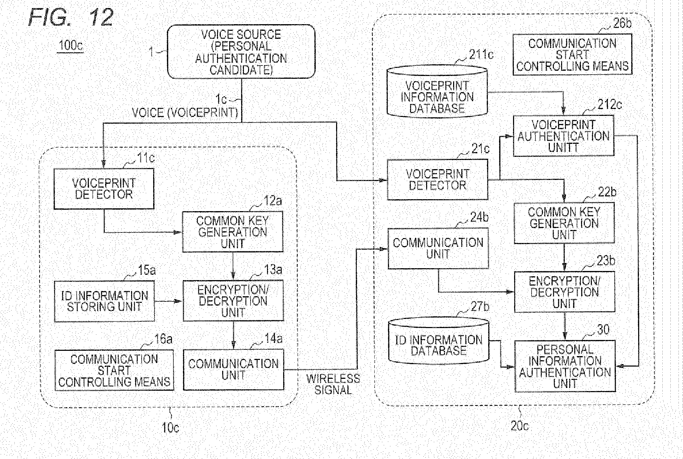

FIG. 12 illustrates a communication system according to Implementation Example 3. The communication system 100c illustrated in FIG. 12 includes an ID information transmitting terminal 10c and a personal authentication device 20c. The sending unit 1 of the simultaneously acquirable biological information according to Implementation Examples 1 and 2 is expressed as a voice source, and can be regarded as a voice of a personal authentication candidate (user).

In the ID information transmitting terminal 10c according to Implementation Example 3, the simultaneously acquirable biological information 1a in Implementation Examples 1 and 2 is changed to a voiceprint 1c. Following this change, the biological information acquiring unit 11a in Implementation Examples 1 and 2 is replaced with a voiceprint detector (a feature acquisition unit) 11c. Other configurations are the same as in Implementation Examples 1 and 2. Therefore, the explanation thereof is omitted.

The personal authentication device 20c according to Implementation Example 3 is almost the same as the ID information receiving terminal device 20b_1 according to Implementation Example 2. However, following the change of the simultaneously acquirable biological information 1a to the voiceprint 1c, the biological information acquiring unit 21a is changed to a voiceprint detector (a feature acquisition unit) 21c, and a voiceprint information database 211c and a voiceprint authentication unit 212c are newly added. Other configurations are the same as those of the ID information receiving terminal device 20b_1 according to Implementation Example 2. Therefore, the explanation thereof is omitted.

By the above-described configuration of the personal authentication device 20c, it is possible to perform the two-step authentication system, by utilizing the voiceprint authentication by means of the user's voice (voiceprint) in addition to the ID information sent by the ID information sending terminal 10c.

By providing a voice print information database 211c in the personal authentication device 20c, and by comparing the acquired voiceprint pattern with the voiceprint pattern of the database 211c by the voiceprint authentication unit 212c, it is possible to identify the owner of the voiceprint.

### <Implementation Example 4>

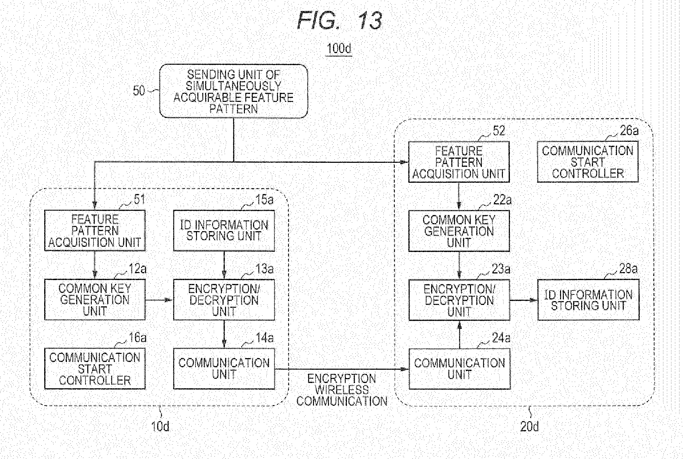

FIG. 13 illustrates a communication system according to Implementation Example 4.

In Implementation Examples 1, 2, and 3, the feature pattern of the biological information is utilized in order to generate the common key. However, in Implementation Example 4, a simultaneously acquirable feature pattern (a feature element) other than the biological information is described.

In the case of a musical instrument for example, the fundamental frequency of a sound is different for each scale. Therefore, a sending unit 50 of the simultaneously acquirable feature pattern can make the feature pattern to be used for generation of the common key from the difference in a performance pattern. That is, when the scale of "do, re, mi, fa, so, 1a, ti, do" is considered, the fundamental frequency of the last "do" is two times higher than the first "do."

When a sound in a human audible frequency band (from about 20 Hz to about 20 kHz) is utilized, there is concern that a playing pattern might be heard by a malicious third party, or there is concern that the sound might give the feeling of discomfort to a third party as a noise. Therefore, as other examples of the sending unit 50, an ultrasonic generator can be utilized that can generate a sound outside the audible frequency band (a sound lower than 20 Hz or higher than 20 kHz).

In a communication system 100d according to Implementation Example 4, following the change of the sending unit 50 of the simultaneously acquirable feature pattern, in the ID information transmitting terminal device 10d, the biological information acquiring unit 11a according to Implementation Example 1 is replaced with a feature pattern acquisition unit (a feature acquisition unit) 51, and in the ID information receiving terminal device 20d, the biological information acquiring unit 21a according to Implementation Example 1 is replaced with a feature pattern acquisition unit (a feature acquisition unit) 52. Other configurations are the same as in Implementation Example 1. Therefore, the explanation thereof is omitted.

Also in such configurations, it is possible to obtain the same effect as in Implementation Example 1.

As described above, the invention accomplished by the present inventors has been concretely explained based on the implementation examples. However, it cannot be overemphasized that the present invention is not restricted to the embodiment and the implementation examples as described above, and it can be changed variously.

## Claims

1. A communication system comprising:
a plurality of separated communication devices to generate the same common key based on a feature element of simultaneously acquirable biological information and to perform encryption and decryption with the use of the common key,
wherein each of the communication devices comprises
a biological information acquiring unit to acquire the feature element of the biological information;
a common key generation unit to generate the common key;
an encryption/decryption unit to encrypt transmit information and to decrypt receive information with the common key; and
a communication unit to receive the transmit information and to transmit the receive information.

2. The communication system according to Claim 1,
wherein the transmit information includes ID information.

3. The communication system according to Claim 1,
wherein the feature element of the biological information is a frequency of vocal cord vibrations.

4. The communication system according to Claim 1,
wherein the feature element of the biological information is a voiceprint.

5. The communication system according to Claim 4,
wherein the transmit information is ID information, and
wherein two-step authentication is performed based on authentication results of the ID information and the voiceprint.

6. A communication system comprising:
an ID information transmitting terminal device; and
one or more ID information receiving terminal devices,
wherein the ID information transmitting terminal device and the one or more ID information receiving terminal devices generate the same common key based on a feature element of simultaneously acquirable biological information,
wherein the ID information transmitting terminal device comprises
a biological information acquiring unit to acquire the feature element of the biological information;
a common key generation unit to generate the common key;
an encryption/decryption unit to encrypt ID information with the common key; and
a communication unit to transmit the encrypted ID information, and
wherein each of the one or more ID information receiving terminal devices comprises
a biological information acquiring unit to acquire the feature element of the biological information;
a common key generation unit to generate the common key;
a communication unit to receive the encrypted ID information; and
an encryption/decryption unit to decrypt the encrypted ID information with the common key.

7. The communication system according to Claim 6,
wherein the ID information transmitting terminal device is a wireless key device, and
wherein the one or more ID information receiving terminal devices are a lock/unlock device.

8. The communication system according to Claim 6,
wherein the simultaneously acquirable biological information is simultaneously acquired by the biological information acquiring unit of the ID information transmitting terminal device and by the biological information acquiring unit of the one or more ID information receiving terminal devices.

9. The communication system according to Claim 8,
wherein the feature element of the biological information is a frequency of vocal cord vibrations.

10. The communication system according to Claim 8,
wherein the feature element of the biological information is a voiceprint.

11. A communication system comprising:
an ID information transmitting terminal device; and
an ID information receiving terminal device,
wherein the ID information transmitting terminal device and the ID information receiving terminal device generate the same common key based on a simultaneously acquirable feature element,
wherein the ID information transmitting terminal device comprises
a feature acquisition unit to acquire the feature element;
a common key generation unit to generate the common key;
an encryption/decryption unit to encrypt ID information with the common key; and
a communication unit to transmit the encrypted ID information, and
wherein the ID information receiving terminal device comprises
a feature acquisition unit to acquire the feature element;
a common key generation unit to generate the common key;
a communication unit to receive the encrypted ID information; and
an encryption/decryption unit to decrypt the encrypted ID information with the common key.

12. The communication system according to Claim 11,
wherein the simultaneously acquirable feature element is a feature element of biological information,
wherein the feature element of the biological information is a frequency of vocal cord vibrations or a voiceprint, and
wherein the simultaneously acquirable biological information is simultaneously acquired by the feature acquisition unit of the ID information transmitting terminal device and by the feature acquisition unit of the ID information receiving terminal device.

13. The communication system according to Claim 12,
wherein the ID information transmitting terminal device is a wireless key device, and
wherein the ID information receiving terminal device is a lock/unlock device.

14. The communication system according to Claim 12,
wherein the common key is generated based a plurality of frequencies of the vocal cord vibrations.

15. The communication system according to Claim 11,
wherein the simultaneously acquirable feature element is a fundamental frequency of the sound in the scale of a musical instrument or a sound in the outside of the audible frequency band.
